# EUROPEAN PATENT SPECIFICATION

(11) **EP 1 849 352 B1**
(45) Date of publication and mention of the grant of the patent: **26.11.2008**
(21) Application number: 07106622.9
(22) Date of filing: 20.04.2007
(51) Int. Cl.: A01F 29/10, A01D 61/02

(54) **Combine**
Mähdrescher
Moissonneuse-batteuse

(30) Priority: 26.04.2006 US 412198
(43) Date of publication of application: 31.10.2007
(73) Proprietor: Deere & Company, Moline, IL 61265-8098 (US)
(72) Inventor: Coers, Bruce A, Hillsdale, IL 61257 (US); Jensen, Roderick J, Moline, IL 61265 (US)
(74) Representative: Holst, Sönke

(56) References cited:
- EP-A1- 0 448 844
- DE-B- 1 186 672
- DE-C- 673 921
- DE-C- 842 280
- US-A- 2 412 179

## Description

The present invention relates to a combine according to the preamble of claim 1.

in traditional combines (EP 0 448 844 A), the conveyor system in the feeder house is comprised of front and rear roller about which an endless belt or chain loops is or are wrapped. The rear roller is driven by belts extending from the combine vehicle causing the rear roller to rotate and to recirculate the endless chain loops. Several metal bars are fixed across the endless chain loops that engage the lop surface of crop matter presented at the forward in (i.e. the inlet) of the feeder house. As the chains recirculate, the bars engage cut crop matter at the feeder house inlet and draw it backward towards the vehicle and the outlet of the feeder house, sliding the cut crop matter upward end backward across the feeder house floor.

These systems suffer from several deficiencies. First, the metal bers dragging across the bottom of the feeder house floor cause significant wear both of the bars and of the feeder house floor. Second, the feeder house conveyor only engages the top of the cut crop matter that it drags through the feeder house and presents to the combine vehicle. The limited engagement prevents the feeder house conveyor from transmitting cut crop material as fast as it could.

EP 1 277 395 A describes a forage harvester with a feeder house. The feeder house comprises two conventional feederhouse conveyors one arranged above the other for receiving crop from assigned sides of a header, feeding it independently and delivering it to a chopping drum.

DE 673 921 C describes a forage cutting machine with an upper conveyor belt and a lower conveyor belt that form a funnel shape opening into which the crop is fed and submitted to the cutting device. The upper belt comprises a plate above its lower strand to avoid that crop penetrates into the interior of the upper conveyor belt end deteriorates its function. In this manner, the upper conveyor belt can be fixedly mounted to the frame of the machine and the known resiliently mounted upper conveyor belts suffering from the disadvantage that their drive mechanism is complicated are avoided.

DE 842 280 C describes another feed conveyor for a forage cutting machine in which the rollers supporting the top conveyor belt are commonly mounted on a rocker arm The front face of the rocker arm is downwardly biased by a spring arrangement.

The problem underlying the invention is thus to provide a conveying system for a feeder house not the recited problems or at least in a reduced manner.

This object is achieved by the subject matter of claim 1. The dependent claims recite advantageous embodiments of the invention.

The top front roller may be larger in diameter than the top rear roller. At least the top front roller may be spring tensioned to float in a direction generally perpendicular to the direction of travel of the cut crop matter through the feeder house. The bottom conveyor may further include a bottom front roller, a bottom rear roller, and a second belt extending around and supported by the bottom front roller and the bottom rear roller. The top conveyor and the bottom conveyor may be coupled together to drive their respective endless belts at the same linear speed from the inlet to the outlet of the feeder house box.

An embodiment of the invention is shown in the drawings, in which:
FIGURE 1 is a side view of an agricultural combine with a feeder house.
FIGURE 2 is a plan view of the agricultural combine of FIGURE 1.
FIGURE 3 is a detail side view of the feeder house of FIGURE 1,
FIGURE 4 is a cross-sectional side view of the feeder house of FIGURE 1 taken at section line 4-4 in FIGURE 2.
FIGURE 5 is a cross-sectional top view of the feeder house of FIGURE 1 taken at section line 5-5 in FIGURE 3.

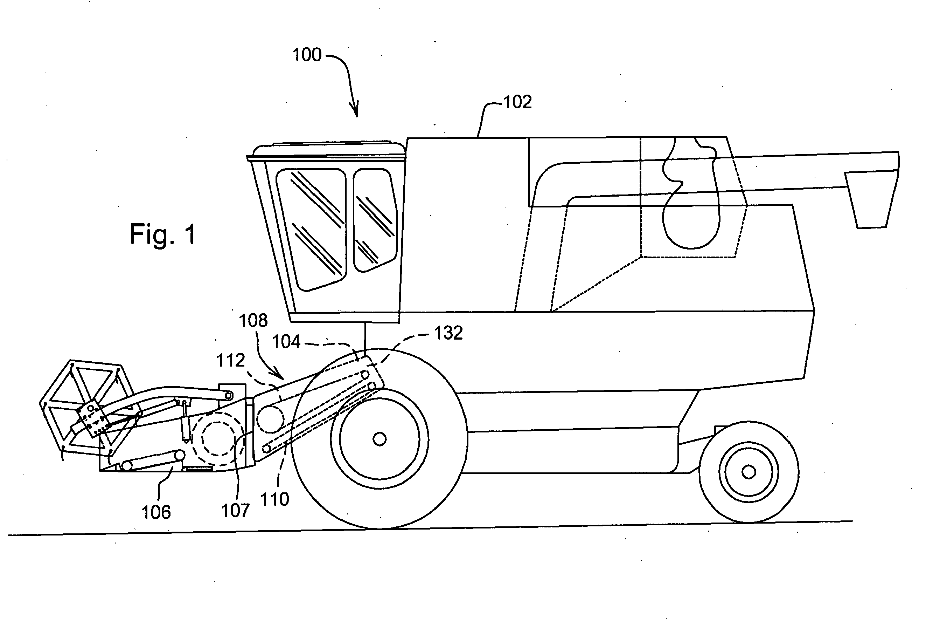

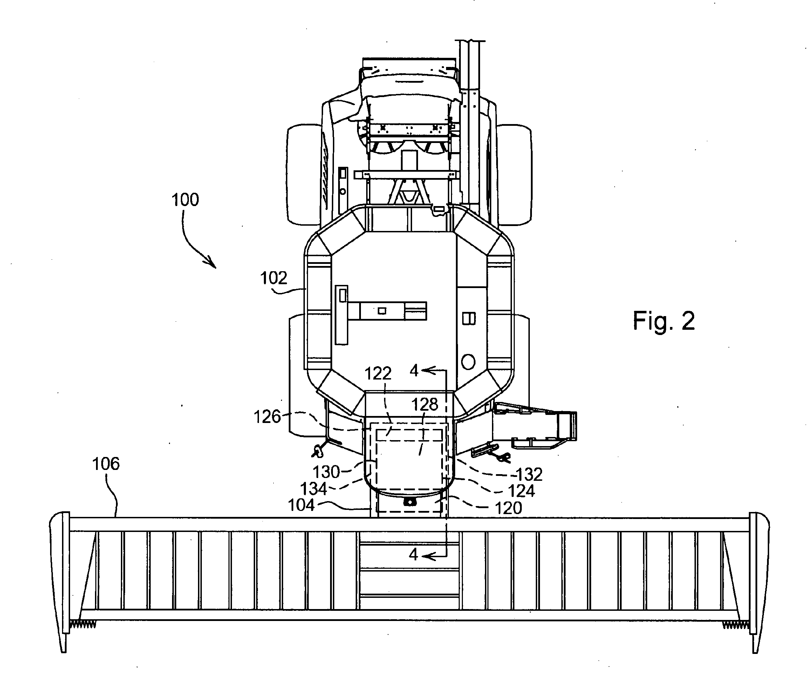

Referring now to FIGURES 1-2, a combine 100 is shown which includes a self-propelled vehicle 102 from which a feeder house 104 is coupled. The feeder house 104 is pivotally coupled to the front end of vehicle 102 and supports a "head" or "header" 106 for movement over the ground. Head 106 is configured to gather crop plants, cut them, and present the cut crop matter to the inlet 107 of the feeder house. Feeder house 104 is configured to receive the cut crop matter and to transmit it via an internal conveyor system to a threshing, separating, and cleaning system provided in vehicle 102 (not shown). The threshing, separating, and cleaning system separates the crop matter from unwanted plant matter and saves the crop in a grain tank (not shown) in vehicle 102.

Feeder house 104 is provided to permit the operator to raise, lower, and pivot head 106 with respect to the ground as combine 100 travels through the field harvesting crops. Of necessity, feeder house 104 must also serve the additional function of conveying cut crop matter from head 106 to vehicle 102 for further processing. The second function, that of conveying cut crop matter, is provided by a conveyor system 108 that is disposed within the feeder house 104. Conveyor system 108 comprises two conveyor systems, a bottom conveyor 110 and a top conveyor 112. During operation, the upper side of the bottom conveyor 110 and the lower side of the top conveyor 112 move towards the outlet and support the cut crop matter between them.

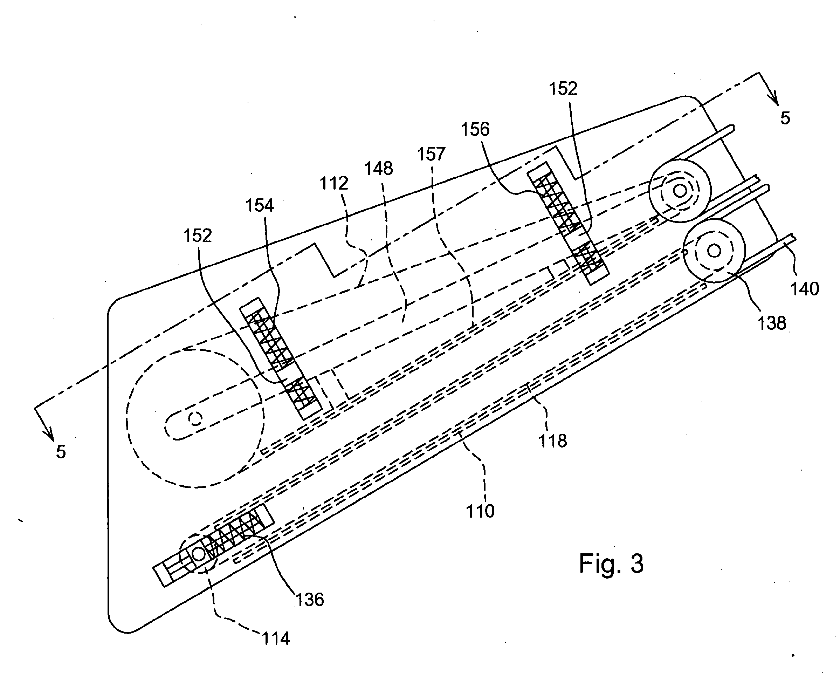

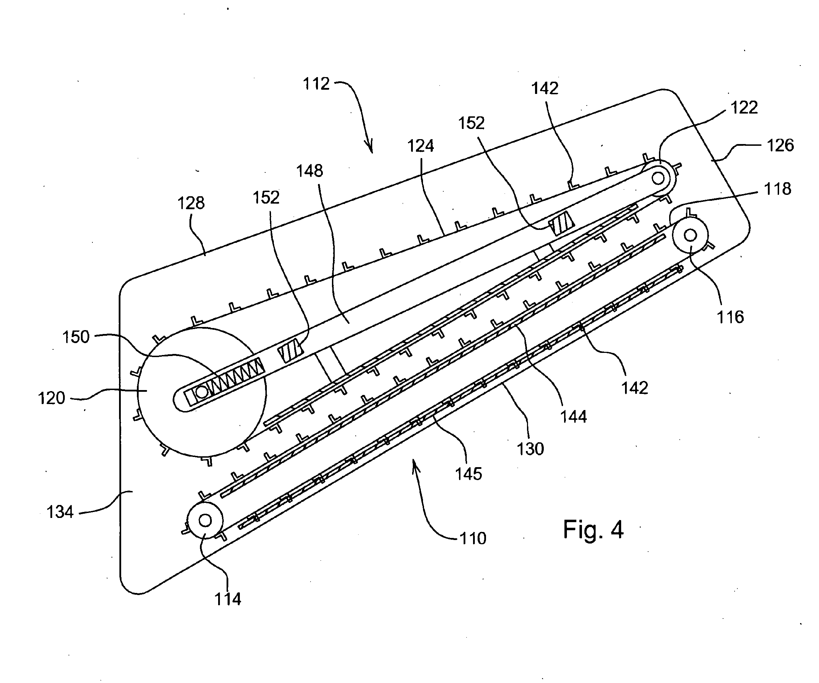

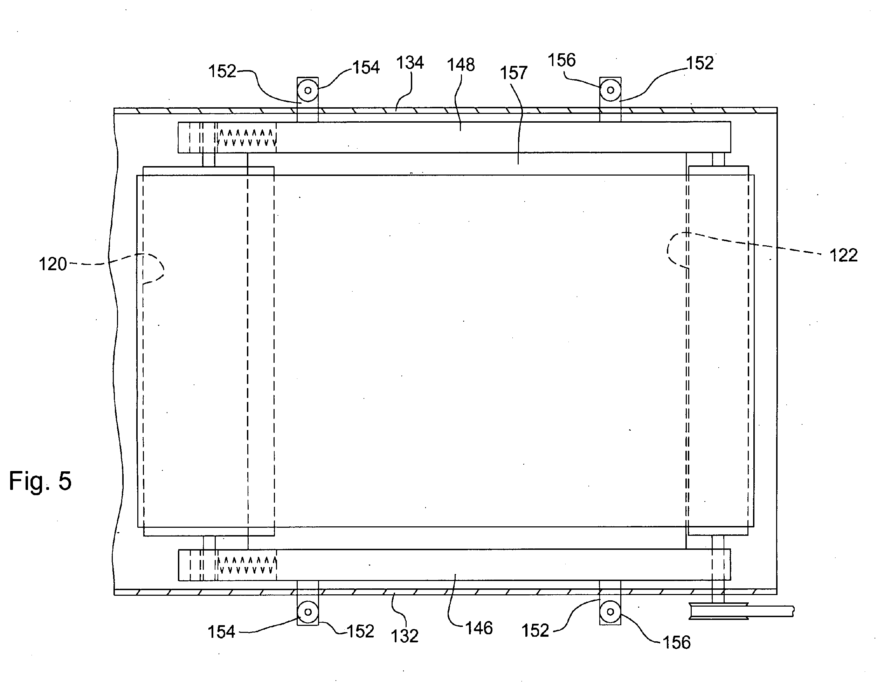

Referring now to FIGURES 3-5, bottom conveyor 110 comprises a front roller 114, a rear roller 116, and an endless belt 118 wrapped around and driven by rear roller 116. Top conveyor 112 comprises a front roller 120, a rear roller 122, and an endless belt 124 wrapped around and driven by rear roller 122.

The conveyor system is disposed within feeder house box 126, which comprises a top plate 128, a bottom plate 130, left plate 132, and right plate 134. These plates are joined at their edges to form a hollow and generally rectangular box having an open front end and an open rear end. The open front end of feeder house box 126 is the inlet of the feeder house and is configured to receive cut crop matter that has been cut and gathered by head 106. The open rear end of feeder house box 126 is the outlet of the feeder house and is configured to deliver the cut crop matter to the threshing system of the vehicle 102.

The front roller 114 of bottom conveyor 110 is disposed horizontally and extends laterally from the left side to the right side of feeder house box 126. Its left end is supported for rotation on left plate 132. Its right end is supported for rotation on right plate 134. Front roller 114 preferably has a diameter of 3-4 inches.

The rear roller 116 of bottom conveyor 110 is disposed horizontally and extends laterally from the left side to the right side of feeder house box 126. Its left end is supported for rotation on left plate 132. Its right end is supported for rotation on right plate 134. Rear roller 116 preferably has a diameter of 3-4 inches.

Front roller 114 is spring tensioned by left and right tensioners 136. These tensioners apply a spring force to the ends of front roller 114 urging it forward, away from rear roller 116, thereby tensioning endless belt 118. Tensioners 136 are adjustable, permitting the operator to vary the spring force applied to front roller 114 and hence the tension generated in the endless belt 118.

Rear roller 116 is driven by an adjustable pulley 138 which is fixed to one end of rear roller 116. Belts 140 extend around adjustable pulley 138 and drive it in rotation.

Endless belt 118 is formed of a fiber or fabric reinforced elastomer. It includes molded-in lugs 142 that extend outward from the free surface of the belt 118 to engage cut crop matter carried through conveyor 108 on the upwardly facing top surface of belt 118. Lugs 142 preferably extend laterally across the top surface

of belt 118. A pan 144 is fixed to the inner surfaces of left plate 132 and right plate 134 and extends between front roller 114 and rear roller 116. Pan 144 provides a support for the top surface of the endless belt 118 as it moves from the front to the rear of the feeder house carrying cut crop matter. When endless belt 118 arrives at rear roller 116, it wraps around the roller and returns to the front roller traveling between pan 144 and bottom plate 130. A sufficient space is provided between pan 144 and bottom plate 130 to permit lugs 142 to return to the front roller without being scrubbed against the top surface of bottom plate 130 and unnecessarily worn. To assist in this process, longitudinally extending flanges 145 support the outer edges of belt 118 as it returns from rear roller 116 to front roller 114. The outer edges of belt 118 are not provided with lugs and therefore can support the lower surface of belt 118 for its return travel to front roller 114.

Front roller 120 of top conveyor 112 is disposed horizontally and extends laterally from the left side to the right side of feeder house box 126. The right end of an axle extending through front roller 120 is supported on a first longitudinal frame member 146 that extends generally longitudinally through box 126 from the inlet to the outlet. The left end of an axle extending through front roller 120 is supported on an elongate, second longitudinal frame member 148 that extends generally longitudinally through box 126 from the inlet to the outlet. This supports roller 120 on members 146,148 for rotation.

In a similar fashion, rear roller 122 of top conveyor 112 is disposed horizontally and extends laterally from the left side to the right side of the feeder house box 126. It is also supported for rotation on an axle extending from its right end on longitudinal frame member 146 and supported for rotation on an axle extending its left end on longitudinal frame member 148. Frame members 146 and 148 extend longitudinally, fore-and-aft, in feeder house box 126 from the inlet of the feeder house to the outlet of the feeder house. Left and right spring tensioners 150 are mounted on the left and right longitudinal frame members 146, 148 to apply a steady spring force to the ends of the axle that extend through front roller 120. This spring force is applied to front roller 120 pushing it forward, away from rear roller 122 in a direction that tends to increase the distance between front roller 120 and rear roller 122. It tends to increase the distance between the rollers, and therefore tends to increase the tension in endless belt 124 which extends around and is supported by front roller 120 and rear roller 122.

Top conveyor 112 is supported within feeder house box 126 by right and left members 146, 148. Members 146, 148 include conveyor supports 152 that extend outward from the members 146, 148 and are supported in vertically oriented spring tensioners 154, 156. A pan 157 extends between and is fixed to members 146 and 148. It is formed as a planar sheet that extends substantially the entire distance between front top roller 120 and rear top roller 122, and between members 146 and 148. It serves to support the lower portion of endless belt 124 as it travels from front roller 120 to rear roller 122 carrying crop material, and is disposed slightly above the lower surface of endless belt 124 to sandwich crop material between the upper surface of lower belt 118 and the lower surface of upper belt 124.

Spring tensioners 154, 156 are oriented vertically and are fixed to left and right side plates 132, 134. Spring tensioners 154, 156 resiliently support members 146, 148 which in turn support rollers 120, 122 in the illustrated position and hold the lower surface 158 of top conveyor belt 124 preferably 1-3 inches above the top surface of lower conveyor belt 118. They provide a gap of 1-3 inches between the top surface of the lower conveyor belt and the bottom surface of the top conveyor belt. As cut crop matter is directed by head 106 into the inlet of feeder house 104, the crop matter presses against front rollers 114 and 120. These rollers rotate such that their two facing belt surfaces travel from the front of the feeder house to the rear of the feeder house at approximately the same speed. Plant matter that abuts either front roller 114 or front roller 120 is drawn into the space between the belts of the top and bottom conveyors and is impelled backwards by the frictional forces of the belts (and particularly the lugs) acting against the bottom and top surface of the cut crop matter.

On occasion, head 106 may feed a substantial amount of cut crop matter to the inlet of the feeder house. As the top and bottom conveyors rotate, joined cut crop matter between them, it may form a mat of substantial thickness, on the order of 6-10 inches in thickness. As this mat forces its way between the top and bottom conveyors, it exerts an upward force against the top conveyor and a downward force against the bottom conveyor. The top conveyor, as discussed above, is supported on spring tensioners 154, 156 which permit the top conveyor to move upward in response to the upward force applied to the top conveyor. In this manner, the top conveyor may accommodate variations in thickness of the crop mat that is drawn into the feeder house. As the amount of material that is introduced into the feeder house decreases in volume, the upward force applied by the crop mat against the top conveyor drops, and spring tensioners 154, 156 will force the top conveyor back down against the top surface of the crop mat.

In the embodiment shown herein, both rollers of the top conveyor are supported on a frame that is constrained to move up and down with respect to the feeder house box 126. In an alternative configuration, rear spring tensioner 156 may be eliminated, and rear roller 122 may thereby be fixed with respect to the feeder house box 126. In this alternative configuration, the rear ends of right and left members 146, 148 are pivotally coupled to right plate 134 and left plate 132, respectively to pivot at their rear ends with respect to feeder house box 126.

## Claims

1. A combine (100) comprising a self-propelled vehicle (102) from which a feeder house (104) is the feeder house (104) supporting a head (106) configured to gather crop plants, cut them and present the cut crop matter to an inlet (107) of the feeder house (104), the feeder house (104) pivotally coupled to the front end of the vehicle (102) and comprising;
a feeder house box (126) further comprising the inlet (107) at one end configured to receive cut crop matter, and an outlet at an opposing end configured to dispense the cut crop matter to a threshing, separating and cleaning system in vehicle (102), and feeder house walls including at least a top plate (128) and a bottom plate (130); and
a bottom conveyor (110) deposed inside the feeder house box (126) and adjacent to the bottom plate (130);
**characterized in that** the feeder house box (126) comprises a top conveyor (112) disposed inside the feeder house box (126) above the bottom conveyor (110) and adjacent to the top plate (128), the top conveyor (112) comprising a top front roller (120), a top rear roller (122), and an endless belt (124) extending around and supported by the top front roller (120) and the top rear roller (122);
that the top front roller (120) and the top rear roller (122) are supported on at least one elongated member (146, 148) that includes altogether four conveyor supports (152) distributed on both sides of the feeder house box (126) and between both ends of the elongate members (146, 148), the conveyor supports (152) extending outward from the members (146,148) through left and right side plates (132, 134) of the feeder house box (126) and resiliently supported in vertically oriented spring tensioners (154, 156) that are fixed to left and right side plates (132, 134) on the exterior face of the side plates (132, 134);
and that during operation, the upper of the bottom conveyor (110) and the lower side of the lop conveyor (112) move towards the outlet and support the cut crop matter between them.

2. The combine (100) of claim 1 wherein the top front roller (120) is larger in diameter than the top rear roller (122).

3. The combine (100) of claim 1 or wherein at least the top front roller (120) is spring tensioned to float in a direction generally perpendicular to the direction of travel of the cut crop matter through the feeder house (104).

4. The combine (100) of one of claims 1 to 3, wherein the bottom conveyor (110) further comprises a bottom front roller (114), a bottom rear roller (116), and a second endless belt (118) extending around and supported by the bottom front roller (114) and the bottom rear roller (116).

5. The combine (100) of claim 4, wherein the top conveyor (112) and the bottom conveyor (110) are coupled together to drive their respects endless belts (124, 118) at the same linear speed from the inlet to the cutlet of the feeder house box (126).

## Patentansprüche

1. Mähdrescher (100), der ein Fahrzeug (102) mit Eigenantrieb umfasst, an das ein Schrägförderer (104) gekoppelt ist, wobei der Schrägförderer (104) einen Vorsatz (106) stützt, der dazu konfiguriert ist, Nutzpflanzen aufzunehmen, sie zu schneiden und das geschnittene Erntegut einem Einlass (107) des Schrägförderers (104) zuzuführen, wobei der Schrägförderer (104) schwenkbar mit dem vorderen Ende des Fahrzeugs (102) verbunden ist und Folgendes umfasst:
ein Schrägförderergehäuse (126), der weiterhin den zur Aufnahme von geschnittenem Erntegut konfigurierten Einlass (107) an einem Ende und
einen zur Abgabe des geschnittenen Ernteguts zu einem Dresch-, Trenn- und Reinigungssystem in dem Fahrzeug (102) konfigurierten Auslass an einem gegenüberliegenden Ende sowie Fördergehäusewände, die mindestens eine obere Platte (128) und eine untere Platte (130) enthalten, umfasst;
eine untere Fördereinrichtung (110), die in dem Schrägfördergehäuse (126) und in der Nähe der unteren Platte (130) angeordnet ist;
**dadurch gekennzeichnet, dass** der Fördergehäusekasten (126) eine obere Fördereinrichtung (112), die in dem Fördergehäusekasten (126) über der unteren Fördereinrichtung (110) und in der Nähe der oberen Platte (128) angeordnet ist umfasst, wobei die obere Fördereinrichtung (112) eine obere vordere Rolle (120), eine obere hintere Rolle (122) und ein Endlosband (124), das sich um die obere vordere Rolle (120) und die obere hintere Rolle (122) erstreckt und von ihnen gestützt wird, umfasst;
dass die obere vordere Rolle (120) und die obere hintere Rolle (122) auf mindestens einem länglichen Glied (146, 148) gestützt werden, das insgesamt vier Fördereinrichtungsträger (152) enthält, die auf beiden Seiten des Schrägfördergehäuses (126) und zwischen beiden Enden der länglichen Glieder (146, 148) verteilt sind, die Fördereinrichtungsträger (152) erstrecken sich von den Gliedern (146, 148) durch eine linke und eine rechte Seitenplatte (132, 134) des Schrägfördergehäuses (126) nach außen und werden in vertikal ausgerichteten Federspannvorrichtungen (154, 156), die an der linken und der rechten Seitenplatte (132, 134) an der Außenfläche der Seitenplatten (132, 134) befestigt sind, elastisch gestützt;
und dass sich im Betrieb die Oberseite der unteren Fördereinrichtung (110) und die Unterseite der oberen Fördereinrichtung (112) zum Auslass bewegen und das geschnittene Erntegut dazwischen stützen.

2. Mähdrescher (100) nach Anspruch 1, wobei die obere vordere Rolle (120) einen größeren Querschnitt aufweist als die obere hintere Rolle (122).

3. Mähdrescher (100) nach Anspruch 1 oder 2, wobei mindestens die obere vordere Rolle (120) so federvorgespannt ist, dass sie in einer allgemein senkrecht zu der Bewegungsrichtung des geschnittenen Ernteguts durch den Schrägförderer (104) verlaufenden Richtung schwimmt.

4. Mähdrescher (100) nach einem der Ansprüche 1 bis 3, wobei die untere Fördereinrichtung (110) weiterhin eine untere vordere Rolle (114), eine untere hintere Rolle (116) und ein zweites Endlosband (118), das sich um die untere vordere Rolle (114) und die untere hintere Rolle (116) herum erstreckt und von diesen gestützt wird, umfasst.

5. Mähdrescher (100) nach Anspruch 4, wobei die obere Fördereinrichtung (112) und die untere Fördereinrichtung (110) miteinander verbunden sind, um ihre jeweiligen Endlosbänder (124, 118) mit der gleichen Lineargeschwindigkeit von dem Einlass zu dem Auslass des Schrägförderergehäuses (126) anzutreiben.

## Revendications

1. Moissonneuse-batteuse (100) comprenant un véhicule autopropulsé (102), auquel est accouplé un dispositif convoyeur (104), le dispositif convoyeur (104) supportant une tête (106) configurée pour récolter les plantes de la récolte, les couper et présenter la matière récoltée et coupée à une entrée (107) du dispositif convoyeur (104), le dispositif convoyeur (104) étant accouplé de manière à pivoter à l'extrémité avant du véhicule (102) et comprenant :
un compartiment de dispositif convoyeur (126) comprenant en outre l'entrée (107) à une extrémité configurée pour recevoir la matière récoltée et coupée, et une sortie à une extrémité opposée configurée pour distribuer la matière récoltée et coupée à un système de battage, de séparation et de nettoyage dans le véhicule (102), et des parois du dispositif convoyeur comportant au moins une plaque supérieure (128) et une plaque inférieure (130) ; et
un transporteur inférieur (110) disposé à l'intérieur du compartiment de dispositif convoyeur (126) et adjacent à la plaque inférieure (130) ;
**caractérisée en ce que** le compartiment de dispositif convoyeur (126) comprend un transporteur supérieur (112) disposé à l'intérieur du compartiment de dispositif convoyeur (126) au-dessus du transporteur inférieur (110) et adjacent à la plaque supérieure (128), le transporteur supérieur (112) comprenant un rouleau avant supérieur (120), un rouleau arrière supérieur (122), et une courroie sans fin (124) supportée par le rouleau avant supérieur (120) et le rouleau arrière supérieur (122) et enroulée autour d'eux ;
**en ce que** le rouleau avant supérieur (120) et le rouleau arrière supérieur (122) sont supportés sur au moins un organe allongé (146, 148) qui comporte au total quatre supports de transporteur (152) répartis sur les deux côtés du compartiment de dispositif convoyeur (126) et entre les deux extrémités des organes allongés (146, 148), les supports de transporteur (152) s'étendant vers l'extérieur depuis les organes (146, 148) à travers des plaques latérales gauche et droite (132, 134) du compartiment de dispositif convoyeur (126) et étant supportés élastiquement dans des dispositifs de tensionnement à ressort orientés verticalement (154, 156) qui sont fixés aux plaques latérales gauche et droite (132, 134) sur la face extérieure des plaques latérales (132, 134) ;
et **en ce que** pendant le fonctionnement, le côté supérieur du transporteur inférieur (110) et le côté inférieur du transporteur supérieur (112) se déplacent vers la sortie et supportent la matière récoltée et coupée entre eux.

2. Moissonneuse-batteuse (100) selon la revendication 1, dans laquelle le rouleau avant supérieur (120) a un plus gros diamètre que le rouleau arrière supérieur (122).

3. Moissonneuse-batteuse (100) selon la revendication 1 ou 2, dans laquelle au moins le rouleau avant supérieur (120) est tendu par ressort de manière à flotter dans une direction généralement perpendiculaire à la direction de déplacement de la matière récoltée et coupée à travers le dispositif convoyeur (104).

4. Moissonneuse-batteuse (100) selon l'une des revendications 1 à 3, dans laquelle le transporteur inférieur (110) comprend en outre un rouleau avant inférieur (114), un rouleau arrière inférieur (116) et une deuxième courroie sans fin (118) supportée par le rouleau avant inférieur (114) et le rouleau arrière inférieur (116) et s'étendant autour d'eux.

5. Moissonneuse-batteuse (100) selon la revendication 4, dans laquelle le transporteur supérieur (112) et le transporteur inférieur (110) sont accouplés l'un à l'autre pour entraîner leurs courroies sans fin respectives (124, 118) à la même vitesse linéaire depuis l'entrée vers la sortie du compartiment de dispositif convoyeur (126).
